# EUROPEAN PATENT APPLICATION

(11) **EP 2 581 825 A2**
(43) Date of publication of application: **17.04.2013**
(21) Application number: 12188498.5
(22) Date of filing: 15.10.2012
(51) Int. Cl.: G06F 9/44

(54) **Setting information creating program, apparatus, and method**

(30) Priority: 13.10.2011 JP 2011226205
(71) Applicant: FUJITSU LIMITED, Kawasaki-shi, Kanagawa 211-8588 (JP); DENSO CORPORATION, Kariya-shi, Aichi-ken, 448-8661 (JP)
(72) Inventor: Hirabayashi, Shunichi, Kanagawa, 211-8588 (JP); Ohta, Yoshiyuki, Kanagawa, 211-8588 (JP); Shikasho, Akira, Kanagawa, 211-8588 (JP); Suzuki, Ryoji, Aichi-ken, 448-8661 (JP)
(74) Representative: HOFFMANN EITLE

(57) **Abstract**

A setting information creating program causes a computer to execute a process of creating first transition information indicating a screen transition process related to a certain program. The setting information creating program cause the computer to execute a process of creating second transition information indicating a transition process related to positional information indicating a screen display position of the certain program. The setting information creating program causes the computer to execute a process of creating setting information for displaying a screen of the program to be changed based on the first transition information at a position corresponding to the positional information to be changed based on the second transition information.

## Description

### FIELD

The embodiment discussed herein is directed to a setting information creating program, a setting information creating apparatus, and a setting information creating method for creating setting information to control screen display.

### BACKGROUND

In a user interface (UI) system, there is a known apparatus that provides support for describing specifications of software, such as a program, that controls display of a screen or actions of a UI. Such an apparatus provides support for describing specifications including a screen specification describing a UI component, such as a button, a character, a graph, or a picture on a screen, and a screen transition specification describing the flow of changes of a screen to be displayed. As one example of the screen transition specifications, a specification of a screen transition is described for realizing a predetermined function for each application. In a UI screen, for example, when a menu displayed on the screen is selected via a mouse, a keyboard, or a finger of an operator, a display screen is changed.

There is also a known apparatus that, in a screen display for changing display components according to screen transitions, classifies screens to be changed into some groups and collectively edits display components to be commonly displayed in the same group.

Patent Document 1: Japanese Laid-open Patent Publication No. 2002-244848

However, the conventional method for describing screen transition specifications has a problem as described below. That is, to describe screen transition specifications of a program that controls screens displayed on a plurality of display devices according to various state changes in addition to according to screen transitions for realizing a predetermined function for each application, contents of the specifications become complicated. This is because, when the screen transition specifications are described, both of an event concerning changes of screens along with screen transitions for realizing a predetermined function and an event concerning changes of states are taken into consideration, and the number of conditional branches related to screen control and the number of conditions used for the conditional branches increase. Examples of the above-described changes include a case in which an input operation that needs an interruption process by an apparatus with the above-described program is performed and a case in which an input operation for switching between functions used by an operator is performed.

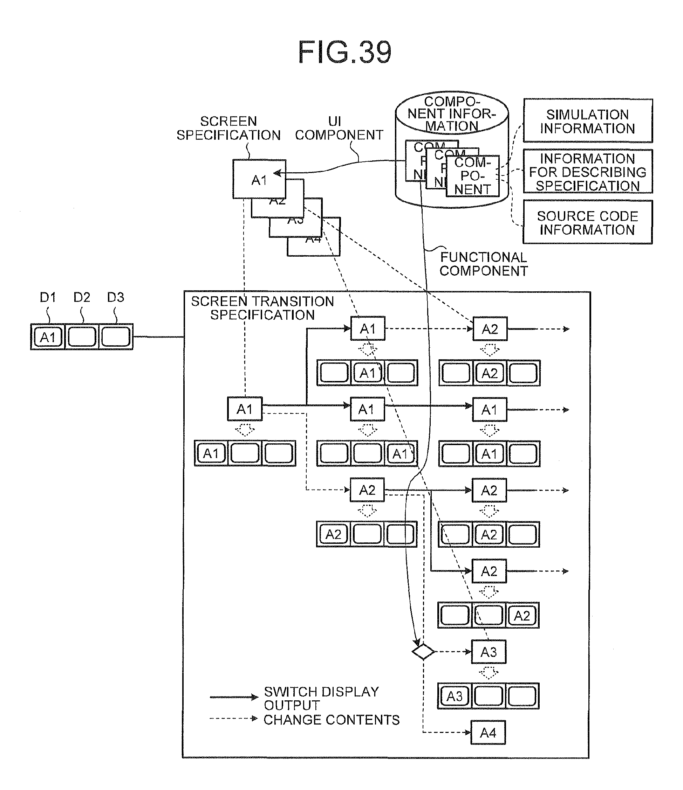

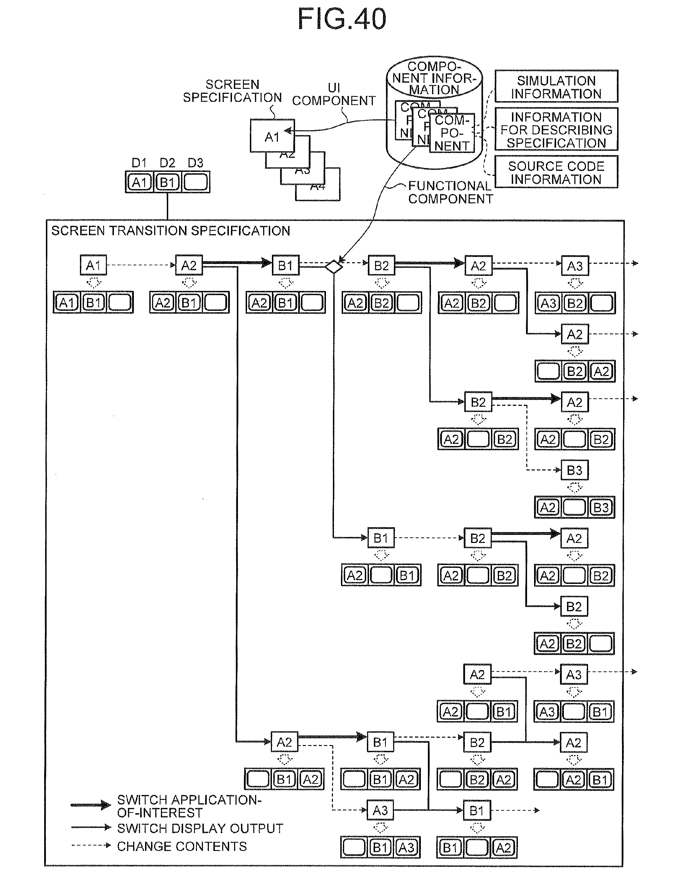

FIG. 39 and FIG. 40 are diagrams illustrating examples of screen transition specifications that are for a program for controlling screens displayed on a plurality of display devices according to various state changes as well as according to screen transitions for realizing a predetermined function for each application, and that are described by using a conventional method for describing the screen transition specifications.

The example in FIG. 39 illustrates a screen transition specification for displaying a screen of one application on three display devices D1 to D3. The screen transition specification of the example in FIG. 39 describes that, as the initial state, an initial screen A1 is displayed on the display device D1 on the left side. The screen transition specification of the example in FIG. 39 also describes that, as the transition of a UI function, the screen A1 is changed to a screen A2 and the screen A2 is changed to a screen A3. The screen transition specification of the example in FIG. 39 also describes that, when the state is changed, the screen A1 is displayed on the display devices D2 and D3 before the screen A1 having been displayed on the display device D1 is changed to the screen A2. The screen transition specification of the example in FIG. 39 also describes that, when the state is changed, the screen A2 is displayed on the display devices D2 and D3 before the screen A2 having been displayed on the display device D1 is changed from to the screen A3. In addition to the above-described descriptions, the screen transition specification of the example in FIG. 39 describes information on a number of screen transitions according to a number of various conditions. Therefore, the contents described in the screen transition specification of the example in FIG. 39 are complicated.

The example in FIG. 40 illustrates a screen transition specification for displaying two applications AP1 and AP2 on the three display devices D1 to D3. The screen transition specification of the example in FIG. 40 describes, as the transitions of two UI functions (AP1 and AP2), a case that the screen A1 is changed to the screen A2 and the screen A2 is changed to the screen A3 and a case that a screen B1 is changed to a screen B2 and the screen B2 is changed to a screen B3. In the example in FIG. 40, the screen transitions by the two UI functions are performed separately. The screen transition specification of the example in FIG. 40 also describes information on a number of screen transitions according to a number of various conditions. The screen transition specification of the example in FIG. 40 also describes that a display device for displaying a screen of the application AP1 and a display device for displaying a screen of the application AP2 are changed along with a change in the state. Therefore, the contents described in the screen transition specification of the example in FIG. 40 are complicated.

Accordingly, it is an object in one aspect of an embodiment of the invention to prevent redundancy of information indicating control contents of screen control including control of screen transitions and control of display positions.

### SUMMARY

According to an aspect of an embodiment, a computer-readable recording medium stores therein a setting information creating program causing a computer to execute a process. The process includes creating first transition information indicating a screen transition process related to a certain program, creating second transition information indicating a transition process related to positional information indicating a screen display position of the certain program, and creating setting information for displaying a screen of the certain program to be changed based on the first transition information at a position corresponding to the positional information to be changed based on the second transition information.

### BRIEF DESCRIPTION OF DRAWINGS

FIG. 1 is a block diagram illustrating a configuration of a setting information creating apparatus according to an embodiment;
FIG. 2 is a diagram illustrating a display example of a screen edit view;
FIG. 3 is a diagram illustrating a display example of a component display setting view;
FIG. 4 is a diagram illustrating a display example of an action definition format selection view;
FIG. 5 is a diagram illustrating a display example of the action definition format selection view;
FIG. 6 is a diagram illustrating a display example of the action definition format selection view;
FIG. 7 is a diagram illustrating a display example of a component attribute selection view;
FIG. 8 is a diagram illustrating a display example of the component attribute selection view;
FIG. 9 is a diagram illustrating a display example of the component attribute selection view;
FIG. 10 is a diagram illustrating a scroll-up action of a list display component;
FIG. 11 is a diagram illustrating a specific example of a UI operation;
FIG. 12 is a diagram illustrating a specific example of a data structure of the list display component;
FIG. 13 is a diagram illustrating a specific example of a data structure of the list display component;
FIG. 14 is a diagram illustrating an example of a definition of an action that executes scroll-up;
FIG. 15 is a diagram illustrating an example of an action definition format;
FIG. 16A is a diagram illustrating a data structure of the action definition format and the list display component;
FIG. 16B is a diagram illustrating a data structure of the action definition format and the list display component;
FIG. 17 is a diagram illustrating an example of specification data in a tree structure;
FIG. 18 is a diagram illustrating an example of the specification data in a tree structure;
FIG. 19 is a schematic diagram illustrating an example of display devices with defined attributes;
FIG. 20 is a diagram illustrating an example of partitions defined for the display devices;
FIG. 21 is a diagram illustrating an example of partitions defined for respective layers of the display devices for each state;
FIG. 22A illustrates an example of an action definition format used for describing state transition specifications;
FIG. 22B illustrates an example of an action definition format used for describing the state transition specifications;
FIG. 22C illustrates an example of an action definition format used for describing the state transition specifications;
FIG. 23 illustrates an example of an association relationship between a screen and a partition;
FIG. 24 is a diagram illustrating an example of information indicating screens displayed on respective layers of the display devices according to each of screen transition specifications and state transition specifications created by the setting information creating apparatus of the embodiment for each of the states;
FIG. 25 is a diagram illustrating an example of a simulation operation screen;
FIG. 26 is a diagram illustrating an example of simulation history information;
FIG. 27 is a diagram for explaining a simulation execution process;
FIG. 28 is a diagram illustrating an example of a verification execution screen;
FIG. 29 is a diagram illustrating an example of metrics for a UI operation;
FIG. 30 is a diagram illustrating an example of test restriction information;
FIG. 31 is a diagram illustrating a structure of a source code;
FIG. 32 is a flowchart for explaining the flow of a first specification creating process performed by the setting information creating apparatus according to the embodiment;
FIG. 33 is a flowchart for explaining the flow of a function verification process performed by the setting information creating apparatus according to the embodiment;
FIG. 34 is a flowchart for explaining the flow of a criteria verification process performed by the setting information creating apparatus according to the embodiment;
FIG. 35 is a flowchart for explaining the flow of a second specification creating process performed by the setting information creating apparatus according to the embodiment;
FIG. 36 is a flowchart for explaining the flow of a test item output process performed by the setting information creating apparatus according to the embodiment;
FIG. 37 is a flowchart for explaining the flow of a source code output process performed by the setting information creating apparatus according to the embodiment;
FIG. 38 is a diagram illustrating a computer that executes a setting information creating program;
FIG. 39 is a diagram illustrating an example of a screen transition specification that is for a program for controlling screens displayed on a plurality of display devices according to various state changes as well as according to screen transition for realizing a predetermined function for each application, and that is described by using a conventional method for describing the screen transition specification; and
FIG. 40 is a diagram illustrating an example of a screen transition specification that is for a program for controlling screens displayed on a plurality of display devices according to various state changes as well as according to screen transition for realizing a predetermined function for each application, and that is described by using a conventional method for describing the screen transition specification.

### DESCRIPTION OF EMBODIMENT

Preferred embodiment of the present invention will be explained with reference to accompanying drawings. The present invention is not limited by the embodiment below.

### Configuration of Setting Information Creating Apparatus

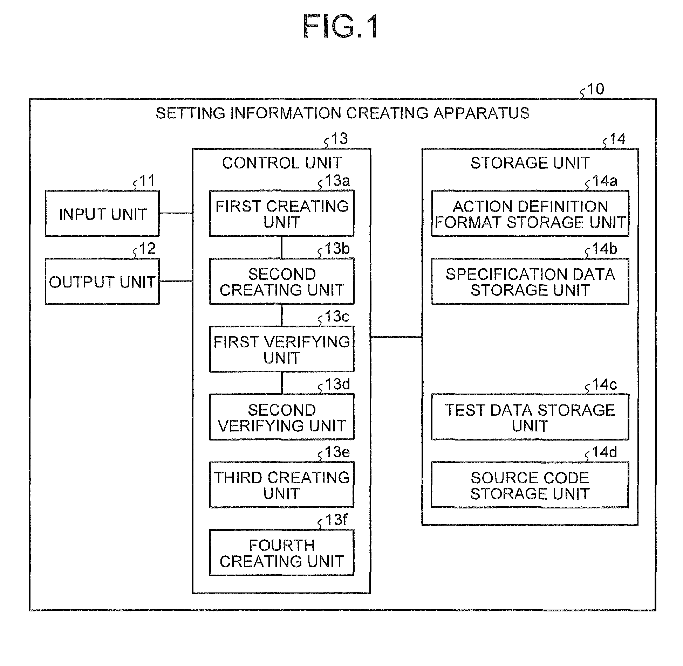

FIG. 1 is a block diagram illustrating the configuration of a setting information creating apparatus 10 according to an embodiment. As illustrated in FIG. 1, the setting information creating apparatus 10 includes an input unit 11, an output unit 12, a control unit 13, and a storage unit 14.

The input unit 11 inputs descriptions concerning specifications or the like, and includes a keyboard, mouse, a microphone, or the like. The output unit 12 outputs, as described later, a screen edit view, a component display setting view, an action definition related view, or the like, and includes a monitor (a display or a touch panel) and a speaker.

The control unit 13 includes an internal memory for storing a program that defines procedures of various processes etc. and data, executes various processes, and includes a first creating unit 13a, a second creating unit 13b, a first verifying unit 13c, a second verifying unit 13d, a third creating unit 13e, and a fourth creating unit 13f.

The first creating unit 13a displays an action definition format that allows information on an action condition of a component displayed on an operation screen of a UI and information on the contents of an action process of the component to be described in a predetermined format, and receives descriptions concerning the specifications of the component based on the action definition format. Specifically, the first creating unit 13a displays, on the output unit 12, the screen edit view for editing an arrangement of a component on a screen, the component display setting view for setting UI components and functional components that operate various functions on a screen, and the action definition related view related to an action definition. The first creating unit 13a receives an operating instruction from an operator via the input unit 11, selects an action definition format stored in an action definition format storage unit 14a, and edits an attribute of a component.

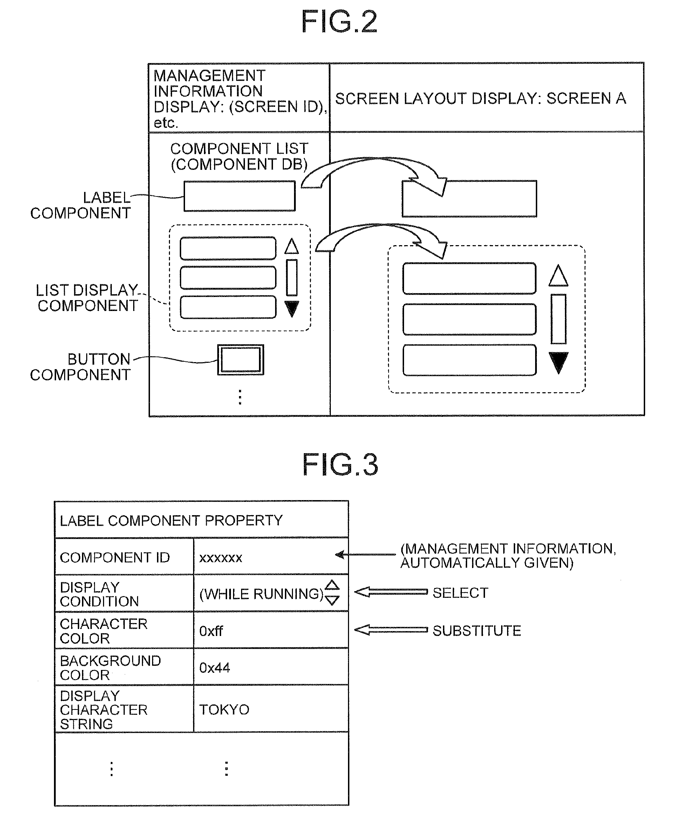

The screen edit view, the component display setting view, and the action definition related view displayed by the first creating unit 13a will be explained below. FIG. 2 is a diagram illustrating a display example of the screen edit view. As illustrated in FIG. 2, the screen edit view displays a "management information display" that displays management information on a screen to be edited, a "component list" that displays a list of UI components (normally, present in a database (DB) in a system) available to be displayed on the screen, and a "screen layout display" that displays a layout of the screen. An operating instruction from a creator of UI specifications is received via the input unit 11, and components to be set are arranged by drag and drop from the component list to the screen layout to create a screen. In the example in FIG. 2, a label component and a list display component are extracted from a component list display portion and are arranged on a screen A.

The component display setting view will be explained below. The component display setting view is displayed by, for example, double-clicking a predetermined component in the "screen layout display" in the screen edit view. As illustrated in FIG. 3, in the component display setting view, attributes (such as a shape, a color, and a display condition) of an arranged UI component are specified. FIG. 3 is a diagram illustrating a display example of the component display setting view.

The action definition related view will be explained below. In the action definition related view, a setting of an action of each of the UI components is received. To set the actions of the UI components, a form of an instruction from a user, a process operation, and an action condition whether to execute the process are created as a UI action definition that is a unified form of a condition for the action and a process concerning the action. In this case, an action definition format in a form accompanied with linguistic expression of the action condition and the process operation is used. The action definition related view is formed of an action definition format selection view and a component attribute selection view. In the action definition format selection view, an operator selects an action definition format for creating an action definition.

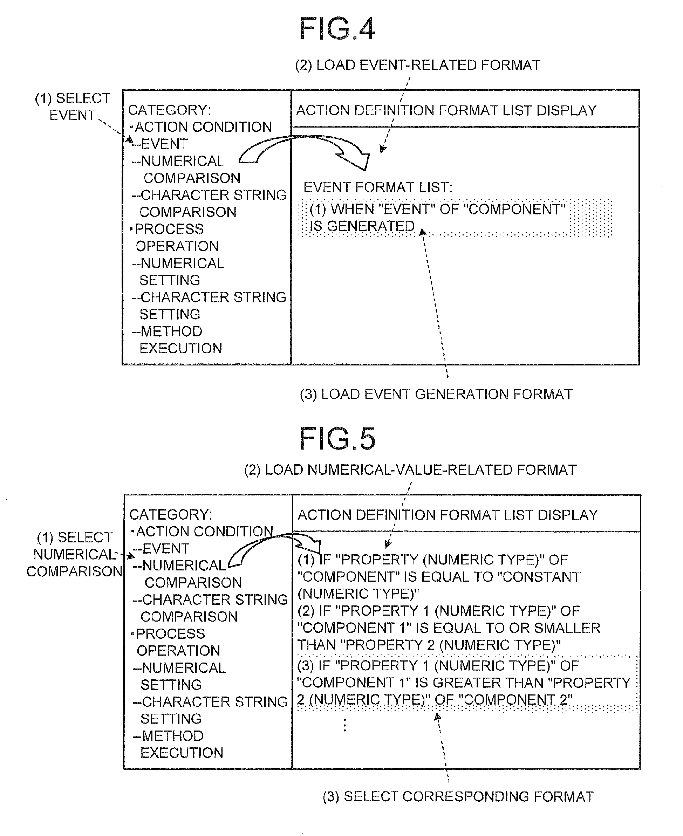

With reference to FIG. 4 to FIG. 6, the action definition format selection view will be explained. FIG. 4 to FIG. 6 are diagrams illustrating display examples of the action definition format selection view. The first creating unit 13a first receives a selection instruction on an action condition or a process operation and a type of a property to be operated from categories of the action definition format in a category window on the left side of the view. When one of the categories is selected with a mouse click in the category window on the left side of the view, the first creating unit 13a displays a list of action definition formats belonging to the selected category on the right side of the view. When receiving a selection of an action definition format in the list, the first creating unit 13a displays the component attribute selection view on the screen.

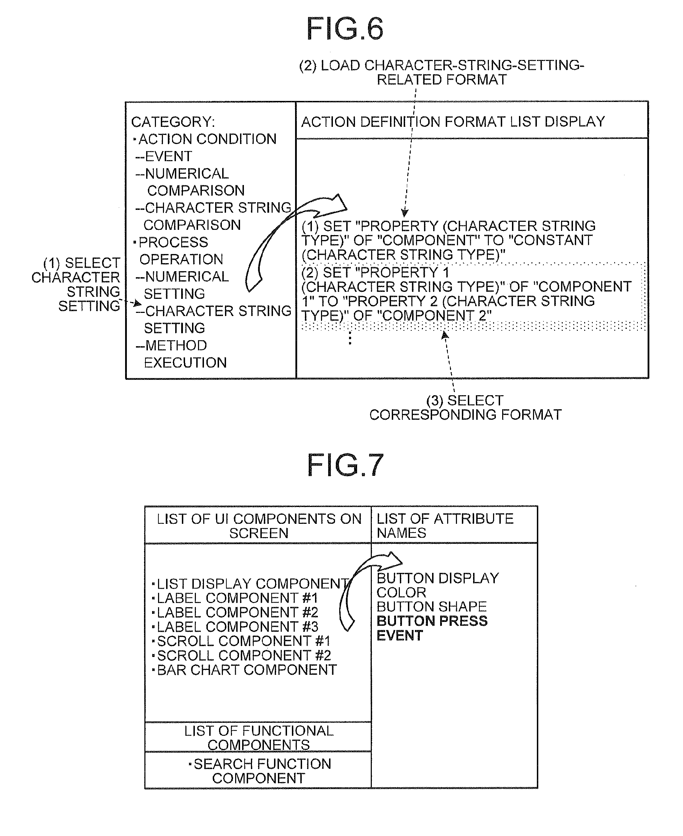

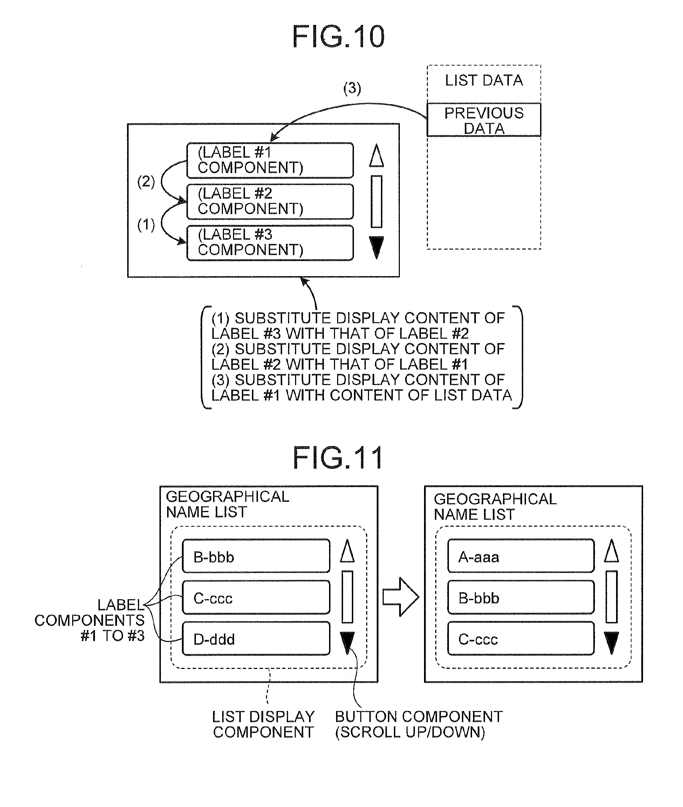

In the component attribute selection view, a component to be set in the selected action definition format, and a property, an event, and a method as attributes of the component are specified. FIG. 7 to FIG. 9 are diagrams illustrating display examples of the component attribute selection view. For example, in the component attribute selection view, as illustrated in FIG. 7 to FIG. 9, a list of components present on a screen in which the specifications are currently under consideration is loaded on the left side of the view. When a selection of a subject component in the list is received, a list of attributes registered for the component is loaded on the right side of the view. A component and its attribute can be specified by selecting an attribute on the right side of the screen. In the examples in FIG. 7 to FIG. 9, out of the list of attribute names, names in bold indicate selectable attributes. Accordingly, an action definition can eventually be created. For example, as illustrated in FIG. 10, an action definition for a process of scrolling displayed data upward is created as an action on a screen. FIG. 10 is a diagram illustrating a scroll-up action of a list display component. The action definition format selection view, the component attribute selection view, and the action definition for the process illustrated in FIG. 4 to FIG. 10 will be described in detail later.

A specific method of creating a UI specification description will be explained below. With reference to FIG. 11, a specific example of a UI operation will be explained. FIG. 11 is a diagram illustrating a specific example of the UI operation. In the followings, an example will be explained in which specifications of the UI operation illustrated in FIG. 11 are created. In FIG. 11, a list of geographical names is displayed on a screen by using a list display component. The list display component is a combined component, in which a button component for referring to a lower item (a scroll-down key ∨) and a button component to scroll-up (a scroll-up key ∧) are arranged on the right side of three label components.

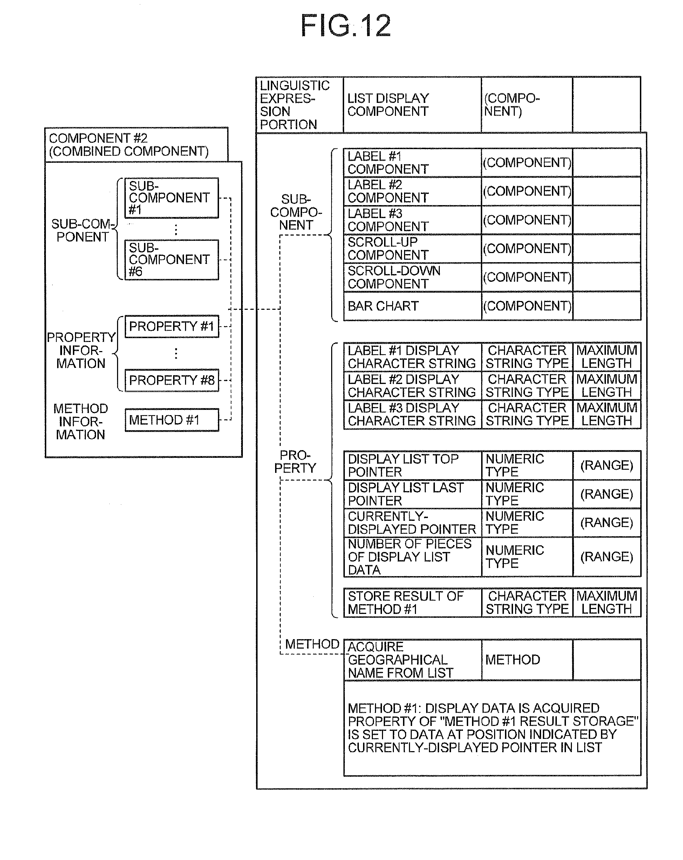

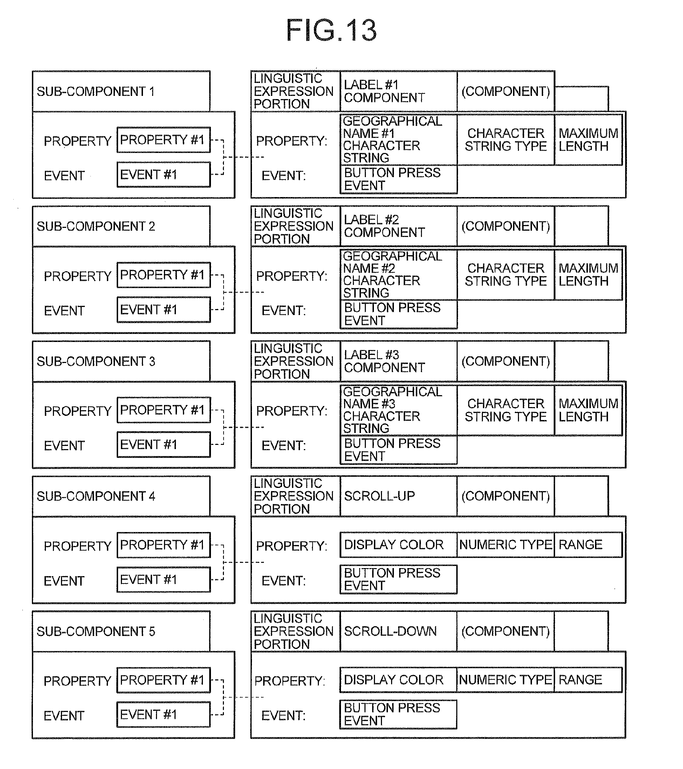

FIG. 12 and FIG. 13 illustrate internal data structures of the list display component illustrated in FIG. 11. FIG. 12 and FIG. 13 are diagrams illustrating specific examples of the data structures of the list display component. As illustrated in FIG. 12, the data structure holds, as attribute information, a sub-component list and information on properties related to character string data to be displayed on the three label components and related to a list from which the data to be displayed is acquired. A sub-component is formed of label components for displaying character string data, button components for scroll-up and scroll-down instructions, and a bar chart component indicating where the data displayed on the three label components are located in the list. In FIG. 13, the explanation of the bar chart component is omitted.

A procedure for setting UI operation specifications will be explained below with an example of UI operation specifications for when a user presses a button component to scroll-up. As a procedure for setting the UI operation specifications, arrangement of components is set, attributes of the components are set, and action definitions of the components are set. Specifically, to set the arrangement of components, the label components, the button components to scroll-up and scroll-down, and the bar chart component are arranged, and their respective locations and sizes are set via the screen edit view. To set the attributes of the components, display colors, sizes, and shapes of the respective components are specified via the component display setting view. For example, triangular shapes are set for button components to scroll-up and scroll-down.

When a start-up event is to be set as an action definition for a component, for example, a button press event that is generated when a scroll-up button is pressed is set as the start-up event. As illustrated in FIG. 4, in the category display portion of the action definition format selection view (on the left side in FIG. 4), a selection of an event category is received. Then, in the action definition format list display portion (on the right side in FIG. 4), a list of formats belonging to the event category is displayed (one type in the case of event), and the displayed formed is selected.

When the format is selected, as illustrated in FIG. 7, the component attribute selection view is displayed to specify a component and its attributes described in the format. On the left side of the component attribute selection view, a list of components belonging to the screen is displayed, and a scroll-up button is selected. On the right side of the screen, a list of attributes belonging to the scroll-up component is displayed, and a "button press event" is selected. While the attributes of the scroll-up button include properties such as a button display color and a button shape, because the action definition format related to the event is already specified as a format, only the event attribute is displayed.

A case will be explained that an action condition is set as an action definition of a component. For example, as the action condition, if the uppermost data is already displayed when data in an upper portion of a list in a list display is to be viewed, a scroll-up operation is disabled. This action condition can be determined based on whether a currently-displayed pointer of the list display component is greater than a display list top pointer. To set the action condition as described above, as illustrated in FIG. 5, a numerical comparison is selected as a category in the action definition format view. Then, a plurality of numerical comparison formats are displayed in the action definition format list view, and a format is selected to compare the amounts of numeric-type properties between components.

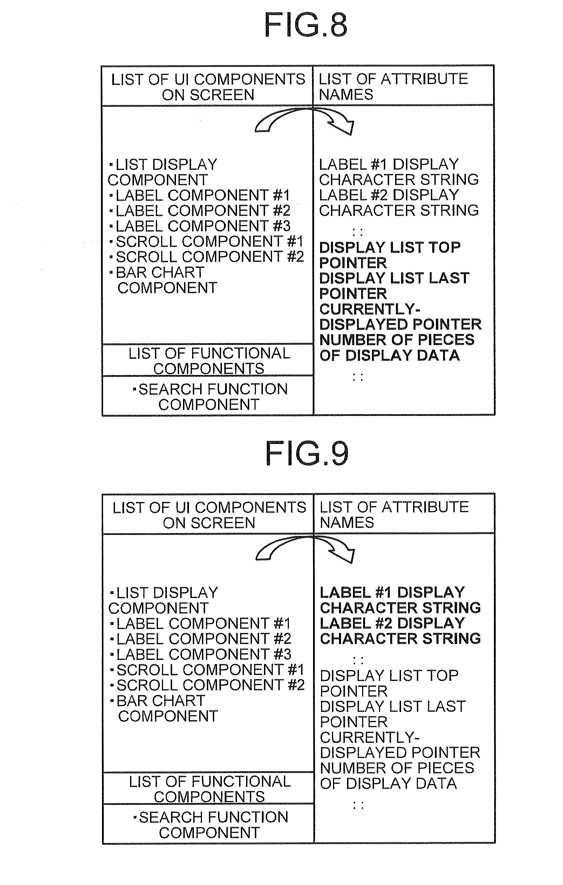

When the format is selected, as illustrated in FIG. 8, similarly to the case of setting a start-up event, the component attribute selection view for setting a component and its attribute is displayed. In this example, a format containing two components is selected; therefore, the component attribute selection view is displayed twice. In the first displayed component attribute selection view, a list display component is selected from the component list. Accordingly, the attributes contained in the list display component are displayed. In this example, a format related to the property of a numeric type is selected; therefore, the properties of a character type, such as "label #1 character string", are not displayed. From among the displayed attributes, "currently-displayed pointer" is selected. In the second displayed component attribute selection view, the property of "display list top pointer" of the list display component is selected in the similar manner. Consequently, a condition of "when a currently-displayed pointer (numeric type) of the list display component is greater than a display list top pointer (numeric type) of the list display component" is set.

A case will be explained that a process operation is set as an action definition for a component. For example, as illustrated in FIG. 10, a process of scrolling display data upward as an action on a screen is performed in the following manner. Specifically, (1) a geographical name #3 character string of a label #3 component is substituted with a geographical name #2 character string of a label #2 component. (2) The geographical name #2 character string of the label #2 component is substituted with a geographical name #1 character string of a label #1 component. (3) The currently-displayed pointer is decremented by one, and the geographical name #1 character string of the label #1 component is substituted with a character string read from list data, which is data of a character string displayed on the list display component.

The contents to be set on a tool for realizing the above processes (1) to (3) are as follows. (1) The property of "label #3 display character string" of the list display component is substituted with the property of "label #2 display character string" of the list display component. (2) The property of "label #2 display character string" of the list display component is substituted with the property of "label #1 display character string" of the list display component. (3) The property of "currently-displayed pointer" of the list display component is decremented by one. (4) A method #1 of the list display component is executed. (5) The property of "label #1 display character string" of the list display component is substituted with the property of "method #1 result storage" of the list display component. (6) The property of "geographical name #1 character string" of the label #1 component is substituted with the property of "label #1 display character string" of the list display component. (7) The property of "geographical name #2 character string" of the label #2 component is substituted with the property of "label #2 display character string" of the list display component. (8) The property of "geographical name #3 character string" of the label #3 component is substituted with the property of "label #3 display character string" of the list display component.

The above processes (1) to (8) are set in sequence via the action definition format selection view and the component attribute selection view. As one example, operations for setting the process operation (7) are illustrated in FIG. 6 and FIG. 9. As illustrated in FIG. 6, in the action definition format selection view, character string setting is selected as a category. A plurality of formats related to the character string setting are displayed in the action definition format list display view, and a format for substituting the properties of a character string type between components is selected. Subsequently, as illustrated in FIG. 9, in the component attribute selection view, a list display component is selected as a component 1 to be set in the format, and the label #2 display character string is selected as a property 1. Consequently, the above process operation (7) is set.

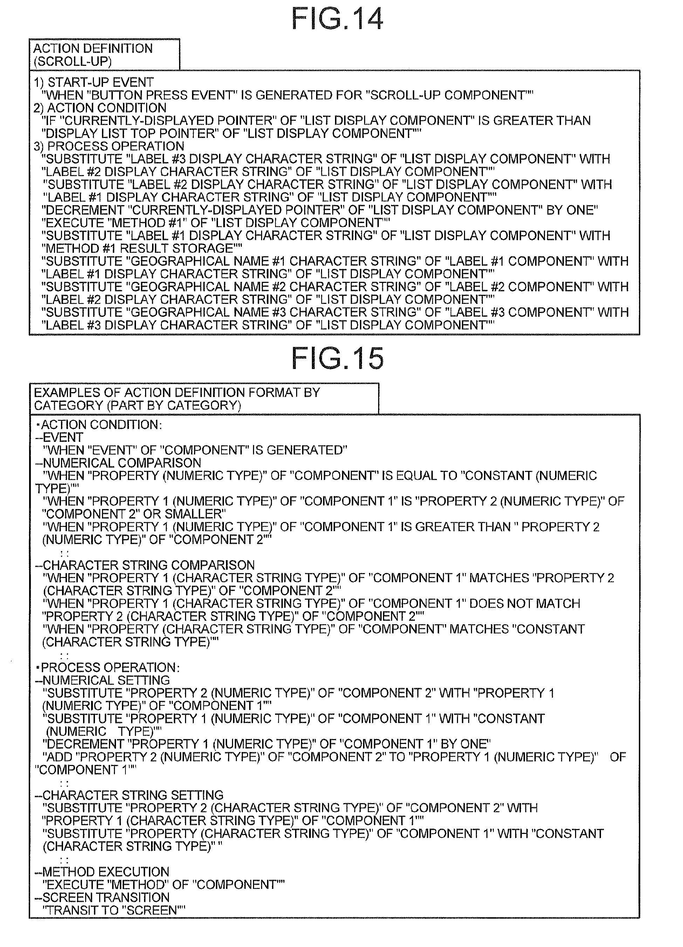

An example of the action definition for executing the scroll-up set as above is illustrated in FIG. 14. FIG. 14 is a diagram illustrating an example of a definition of an action that executes scroll-up. As illustrated in FIG. 14, a "start-up event" indicating an event that causes an action of a component, an "action condition" indicating a condition for an action of the component, and a "process operation" indicating the contents of an operation of the component are set as an action definition.

For example, as illustrated in FIG. 14, as the "start-up event", it is set that an action of a component, such as press of a button component on a screen, is generated. As "the action condition", it is set that a process operation is performed under the condition that a currently-displayed pointer of the list display component is greater than a display list top pointer of the list display component. As the "process operation", it is set that, for example, "the label #3 display character string of the list display component is substituted with label #2 display character string of the list display component".

An example of the action definition formats is illustrated in FIG. 15. FIG. 15 is a diagram illustrating an example of the action definition formats. As illustrated in FIG. 15, the action definition formats are prepared for each of categories. The categories contain the action condition and the process operation. As the categories of the action condition, event, numerical comparison, and character string comparison are included. As the categories of the process operation, numerical setting, character string setting, method execution, and screen transition are included. For example, the setting information creating apparatus 10 stores therein an action definition format of "when an event of a component is generated" in the category of event in the action condition.

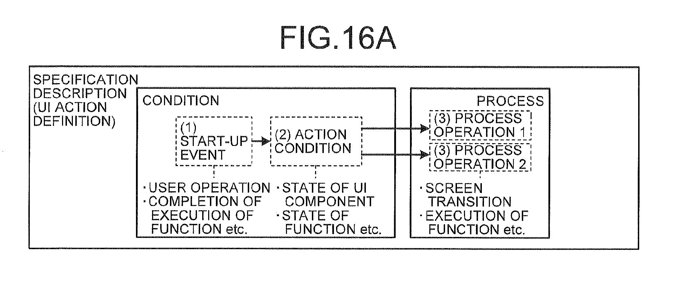

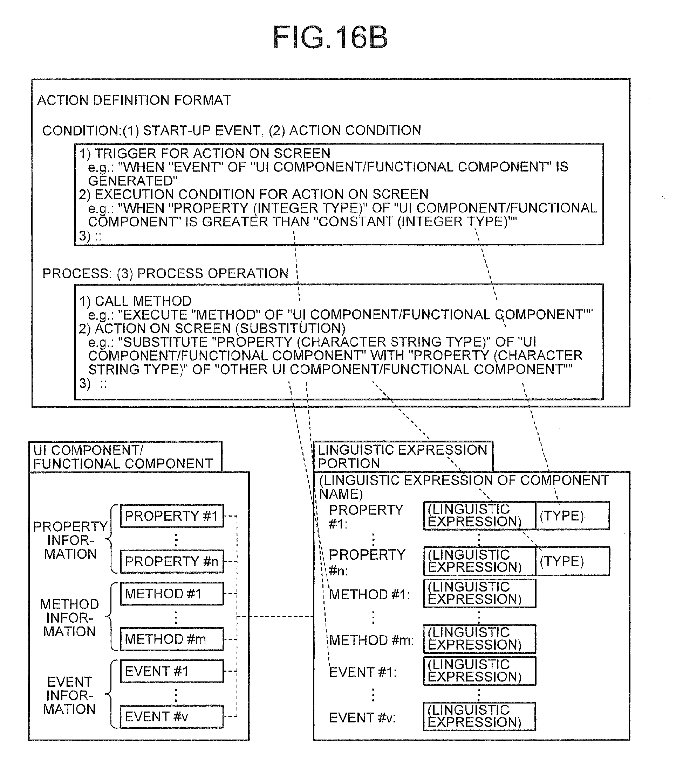

In this way, the first creating unit 13a describes the start-up event, the action condition, and process operation in accordance with the action definition formats, and stores the described data as specification data in a specification data storage unit 14b. With reference to FIG. 16A and FIG. 16B, a series of processes for describing the start-up event, the action condition, and process operation in accordance with the action definition formats, and storing the described data as the specification data will be explained. FIG. 16A and FIG. 16B are diagrams illustrating data structures of an action definition format and a list display component.

As illustrated in FIG. 16A, actions of a UI component are separated into a condition and a process. The first creating unit 13a describes specification definitions of the start-up event and the action condition as the definition of a condition of the UI component. Examples of the start-up event include a situation in which a user presses a component on a screen and a situation in which execution of a function is finished. A system is notified of each of the situations as an event. The action condition describes a condition under which a UI operation is activated upon generation of a start-up event. In some cases, no action condition is set and a UI operation is activated unconditionally whenever a start-up event is generated. The action of the UI component is described in a form of the process operation. The process operation specifies a change of a component on a screen, a screen transition, and a function or the like that operates in a system (application). For example, it is set that when a button on a screen is pressed, not an operation on the screen but an operation of the body of a built-in system is executed.

The first creating unit 13a receives descriptions on the above-described operations and conditions of UI components in accordance with the action definition format as illustrated in FIG. 16B. As illustrated in FIG. 16B, the action definition format is a prescribed form for UI components and functional components and their parameters provided to specify start-up events, action conditions, and process operations, and is formed of frames for setting components and parameters and linguistic expression indicating operations. The use of the linguistic expression allows an operator who is not familiar with a software structure of a UI operation to create specifications of the UI operation.

For example, to specify a start-up event, an action definition format of "when an event of a UI component/functional component is generated" is used. In the format, the operator specifies a component for which he/she wants to set a start-up event in the portion of "UI component/functional component", and then specifies an event to be used in the portion of "event".

An action definition format for specifying an action condition is a description indicating a state of the property of a UI component, and various formats are prepared according to types of properties and comparison methods of the properties. For example, to determine whether the color of a button is black, the operator uses an action definition format of "if the property (integer type) of a UI component/functional component is equal to a constant (integer type)", and sets a button component as the UI component/functional component and a display color property as the property (integer type). The operator further specifies an integer value for comparison. Formats for setting a process operation include a format that specifies an execution method of a UI component, and a format that is for substitution or calculation of property data, such as "substitution of the property (integer type) of a UI component/functional component with the property (integer type) of another UI component/functional component".

FIG. 16B also illustrates an example of the list display component. As illustrated in FIG. 16B, the list display component is formed of a UI component, a functional component, and a linguistic expression portion. As illustrated in FIG. 16B, a data structure of the UI component includes, as data for specifying a display content and an actions of a component, a "property" indicating a display content, and a "method" and an "event" as the information for specifying an action. The property includes various attribute values of a component and data belonging to the component. For example, the property includes a shape of the component, a position of the component on a screen, a normal color of the component, a color of the component when it is pressed, and character string data to be displayed on the component. Each property includes information for specifying an attribute or a range of a setting value of data to be stored. The method is an operation associated with the component. For example, the method includes a process of incrementing a value of a currently-displayed pointer of a list display component by one. The event indicates an event of various types issued by the component. For example, the event includes a button press event for notifying that the button is pressed.

A functional component, which operates various functions implemented by the built-in system upon reception of an instruction from a UI component on a screen, has a data structure common to those of the components. As the method, for example, an operation for giving an instruction to turn an air condition on or off may be defined. As the event, an event to be issued when an operation specified by the method is normally finished may be defined. For example, an activation completion event may be defined, which is issued when an activation method is executed and the activation is normally completed. As the property, a parameter for calling a method or data for notifying a status of an operation may be set.

Furthermore, a UI component and a functional component are accompanied with, although omitted in the drawings, an executable software module provided with a certain interface to allow execution by a simulator and source code information to create a source code. The UI component and the functional component are also accompanied with linguistic information that is used when a specification reviewer who is not familiar with the software structure of an UI operation creates specifications of the UI operation.

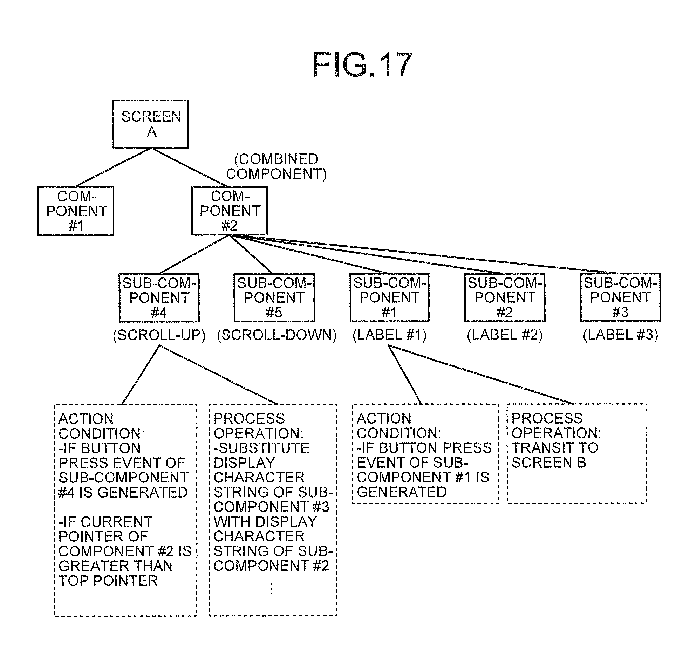

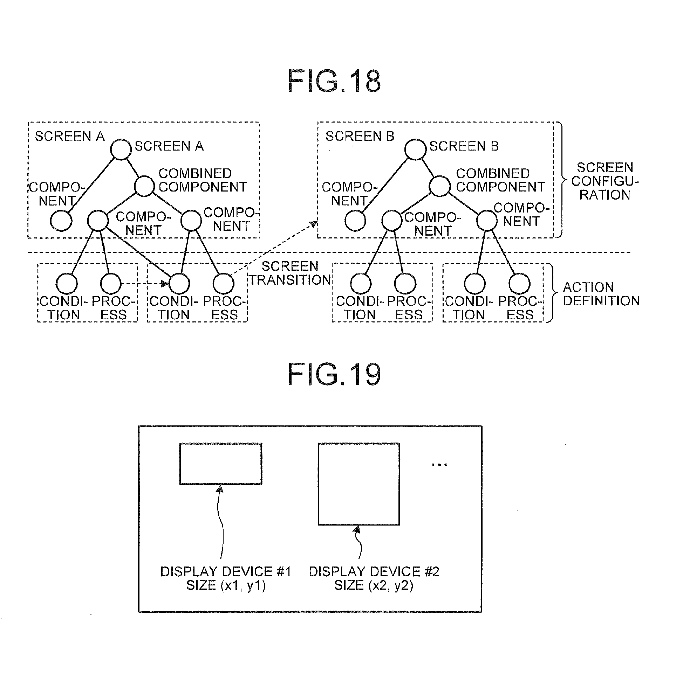

With reference to FIG. 17 and FIG. 18, structures of specification data that is input according to the action definition formats will be explained. FIG. 17 and FIG. 18 are diagrams illustrating examples of specification data in tree structures. The first creating unit 13a converts, as illustrated in FIG. 17 and FIG. 18, specification data into data in a tree structure. As illustrated in FIG. 17, a screen A is defined as a top node and is connected to a component #1 and a component #2 being a combined component, where the components #1 and #2 serve as lower nodes. The component #2 being a combined component is connected to the sub-components #1 to #5 serving as lower nodes.

In the sub-components, action conditions and process operations are defined. For example, a label #1 as the sub-component #1 is defined with an action condition of "if a button press event of the sub-component #1 is issued", and is defined with a process operation of "transition to a screen B". Accordingly, when a screen transition is to be performed, as illustrated in FIG. 18, data is made in a tree structure such that the screen A is changed to the screen B. In this way, the first creating unit 13a describes screen transition specifications for screen transition to realize a predetermined function for each application by using the action definition formats. That is, the first creating unit 13a creates the screen transition specifications as describe above.

The second creating unit 13b creates transition information indicating a positional information transition process related to positional information indicating a screen display position of a program such as an application. A specific example will be explained below. The second creating unit 13b receives identification information of each of display devices for displaying a screen of a program and receives sizes of display areas, which are input in the control unit 13 by a designer of the screen transition specifications through an operation of the input unit 11. The second creating unit 13b stores the received pieces of identification information and the sizes of the respective display devices in the storage unit 14 in an associated manner, and defines attributes of the respective display devices. FIG. 19 is a schematic diagram illustrating an example of the display devices with the defined attributes. In the example in FIG. 19, the size of a display device with identification information #1 is (x1, y1). In the example in FIG. 19, the size of a display device with identification information #2 is (x2, y2).

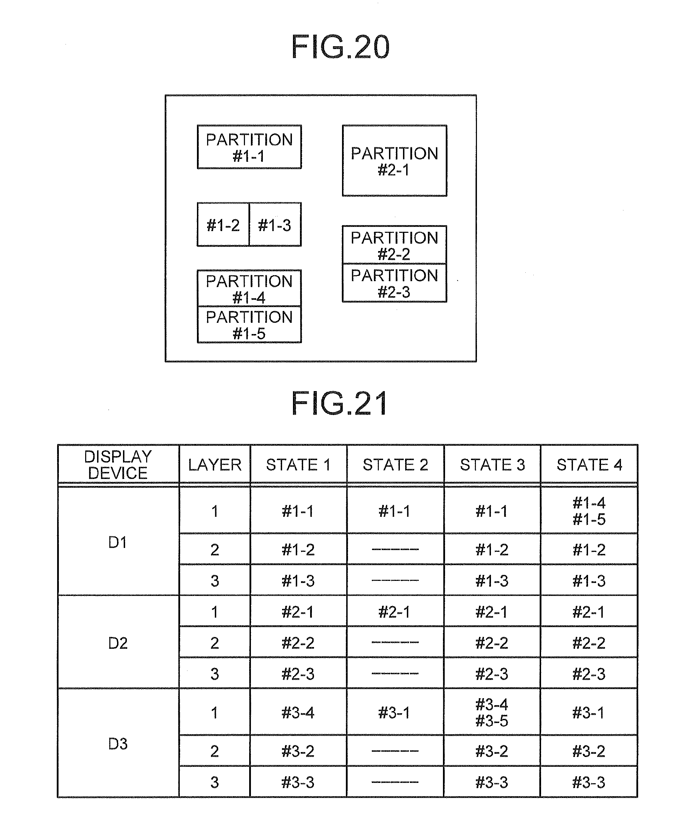

Subsequently, the second creating unit 13b receives partitions for the respective display devices, which are input in the control unit 13 by the designer of the screen transition specifications through an operation of the input unit 11. The second creating unit 13b defines the received partitions of display areas of the respective display devices. FIG. 20 is a diagram illustrating an example of the partitions defined for the respective display devices. The example in FIG. 20 illustrates a case that the whole display area of the display device with the identification information #1 is set as one partition #1-1. The example in FIG. 20 also illustrates a case that the display area of the display device with the identification information #1 is divided into two partitions #1-2, #1-3 in the horizontal direction. The example in FIG. 20 also illustrates a case that the display area of the display device with the identification information #1 is divided into two partitions #1-4, #1-5 in the vertical direction. The example in FIG. 20 also illustrates a case that the whole display area of the display device with the identification information #2 is set as one partition #2-1. The example in FIG. 20 also illustrates a case that the display area of the display device with the identification information #2 is divided into two partitions #2-2, #2-3 in the vertical direction.

Subsequently, the second creating unit 13b receives partitions for respective layers of each of the display devices for each of states, which are input in the control unit 13 by the designer of the screen transition specifications through an operation of the input unit 11. The second creating unit 13b then defines the received partitions of respective layers of the display devices for each of the states. FIG. 21 is a diagram illustrating an example of partitions defined for the respective layers of the display devices for each state. The example in FIG. 21 illustrates a case that the partition #1-1 is associated with a layer 1 of a display device D1 in a state 1. The example in FIG. 21 also illustrates a case that partitions #3-4 and #3-5 are associated with a layer 1 of a display device D3 in a state 3. In this way, the second creating unit 13b creates information indicating transitions of partitions of the layers of the respective display devices according to state transitions.

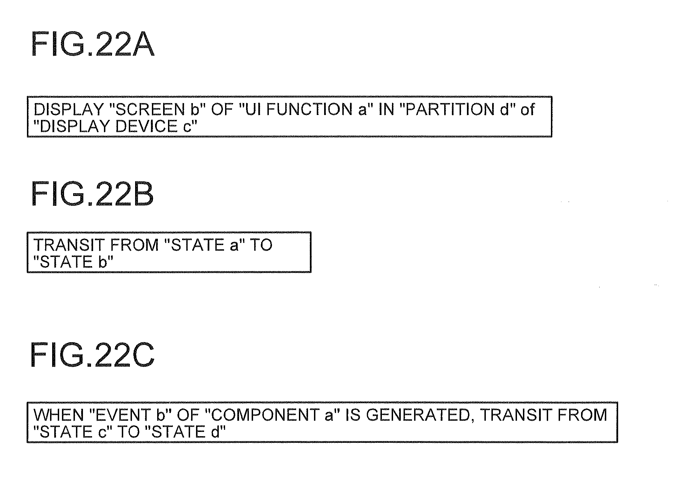

The second creating unit 13b also creates setting information indicating that a screen, which is changed according to transitions, is displayed in a partition, which is divided for each of the layers and which is changed based on information indicating transitions of the partitions of each of the layers of the display devices according to state transitions. A specific example will be explained below. The second creating unit 13b describes state transition specifications, in which a flow of changes of states is described, by using action definition formats. FIG. 22A, FIG. 22B, and FIG. 22C illustrate examples of the action definition formats used to describe the state transition specifications. When using the action definition format in the example in FIG. 22A, the second creating unit 13b sets a UI function selected by a user, such as a program of an application etc., in the portion of "UI function a". When using the action definition format in the example in FIG. 22A, the second creating unit 13b also sets a screen selected by the user in the portion of "screen b". When using the action definition format in the example in FIG. 22A, the second creating unit 13b also sets a display device selected by the user in the portion of "display device c". When using the action definition format in the example in FIG. 22A, the second creating unit 13b also sets a partition selected by the user in the portion of "partition d". In this way, the second creating unit 13b can describe the state transition specification of "a selected screen of a selected program is displayed in a selected partition of a selected display device". Similarly, when using the action definition format in the example in FIG. 22B, the second creating unit 13b can describe the state transition specification of "a selected state is changed to a selected state". Similarly, when using the action definition format in the example in FIG. 22C, the second creating unit 13b can describe the state transition specification of "when a selected event of a selected component is generated, a selected state is changed to a selected state".

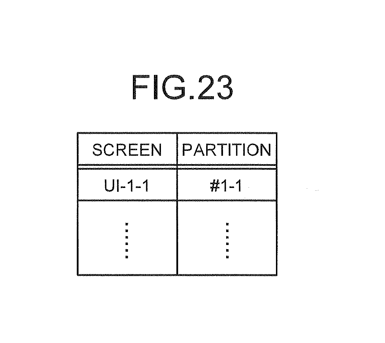

Subsequently, the second creating unit 13b receives an association relationship between a screen and a partition in which the screen is displayed, which is input in the control unit 13 by the designer of the screen transition specifications through an operation of the input unit 11. The second creating unit 13b stores the received association relationship between the screen and the partition in the storage unit 14, and defines the association relationship between the screen and the partition. FIG. 23 illustrates an example of the association relationship between the screen and the partition. In the example in FIG. 23, a screen UI-1-1 and the partition #1-1 are associated with each other.

The second creating unit 13b creates information indicating a screen to be displayed in each of the layers of the display devices for each of the states, based on the association relationship between the screen and the partition and based on the information indicating transitions of the partitions of the layers described above. Specifically, the second creating unit 13b associates a layer and a screen to be displayed in the layer via a partition, based on the above two types of the information. Therefore, the screen transition specifications for realizing a predetermined function for each application and the screen transition specifications for a program that controls screens displayed on respective display devices according to various changes of states are described separately. Consequently, it is possible to create transition information with simple contents. Namely, it is possible to prevent redundancy of information indicating control contents of screen control including control of screen transitions and control of display positions.

Furthermore, a screen and a layer are not directly but indirectly associated with each other via a partition. Therefore, it is possible to easily associate the screen and the layer. Moreover, it is possible to create the screen transition specifications and the state transition specifications by using common components.

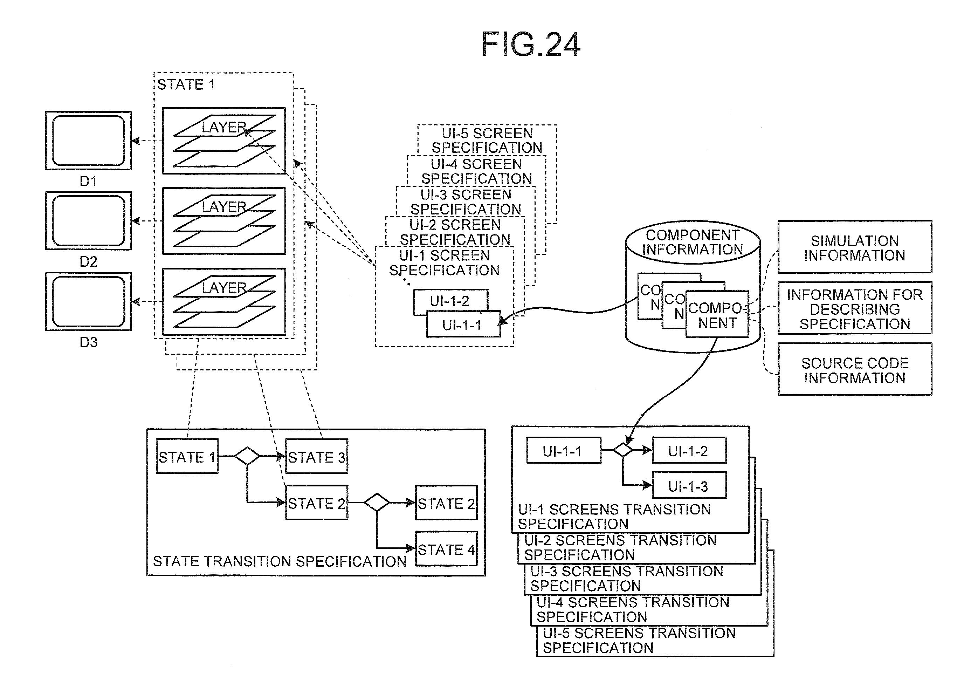

FIG. 24 is a diagram illustrating an example of information indicating screens displayed on respective layers of the display devices according to each of the screen transition specifications and the state transition specifications created by the setting information creating apparatus 10 of the embodiment for each of the states. In the example in FIG. 24, screen transition specifications and state transition specifications of applications UI-1 to UI-5 are separately described, and the contents of the screen transition specifications and the state transition specifications are simplified. The example in FIG. 24 illustrates a case that screens UI-1-1 ... of the respective applications UI-1 to UI-5 are associated with respective layers via partitions. In the example in FIG. 24, upper layers are preferentially displayed.

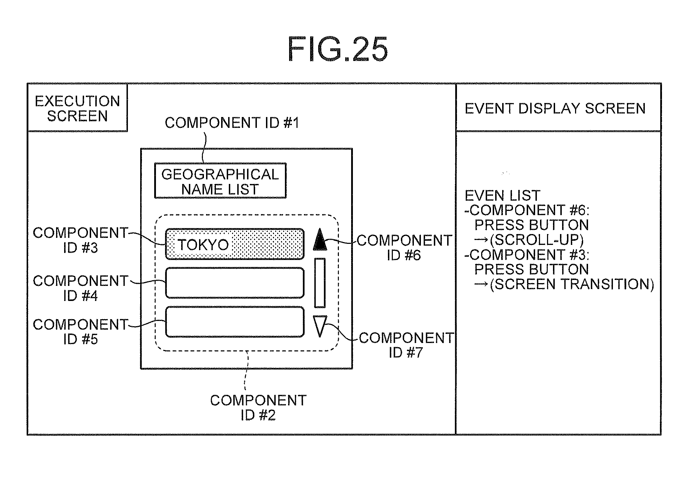

The first verifying unit 13c displays an operation screen of a user interface and verifies an action of a component displayed on the operation screen of the user interface based on the information on a condition of the action of the component and information on the contents of a process concerning the action of the component. Specifically, the first verifying unit 13c scans specification data of each of screens in a tree structure from the top node and extracts a component for which an event is set. The first verifying unit 13c then displays an event list together with a screen in execution on a simulation operation screen as illustrated in FIG. 25. FIG. 25 is a diagram illustrating an example of the simulation operation screen.

After the simulation operation screen is displayed, a simulation operator verifies a UI operation by issuing an event in the execution screen with reference to the event list that is a list of events displayed on an event display screen. In this way, it is possible to fully check actions for all events. When the execution of the simulation is started by issuing an event, such as press of a button, on the simulation execution screen, the first verifying unit 13c notifies the components of the operation. Each of the components is accompanied with an execution module, and the module is activated to execute an action condition or a process operation. In some cases, an operation of a different component may be specified in the contents of a process operation. In such a case, a notice is issued to the execution module of the different component. For example, as illustrated in FIG. 25, it is possible to check the contents of a process of pressing a scroll-up component of a component #6 on the simulation operation screen.

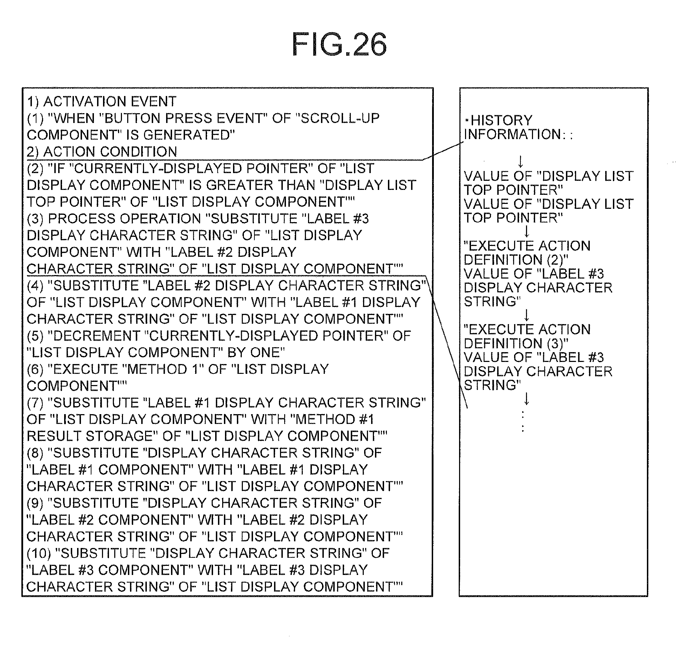

Each of actions and operations in a simulation is processed by an action definition. Therefore, history information of the simulation can be created by accumulating executed action definitions and property values of components before and after execution of action definitions. FIG. 26 is a diagram illustrating an example of simulation history information. For example, the example in FIG. 26 illustrates action definitions for when a scroll-up component is pressed in the screen A, illustrates a situation of passage of execution of the action definitions that can be set in the simulation, and illustrates changes in property values. If detailed execution history of a UI operation is to be extracted, settings become complicated. In this case, however, it may be possible to set a brake point in an action definition to make it easier to check detailed operations with a simple setting operation.

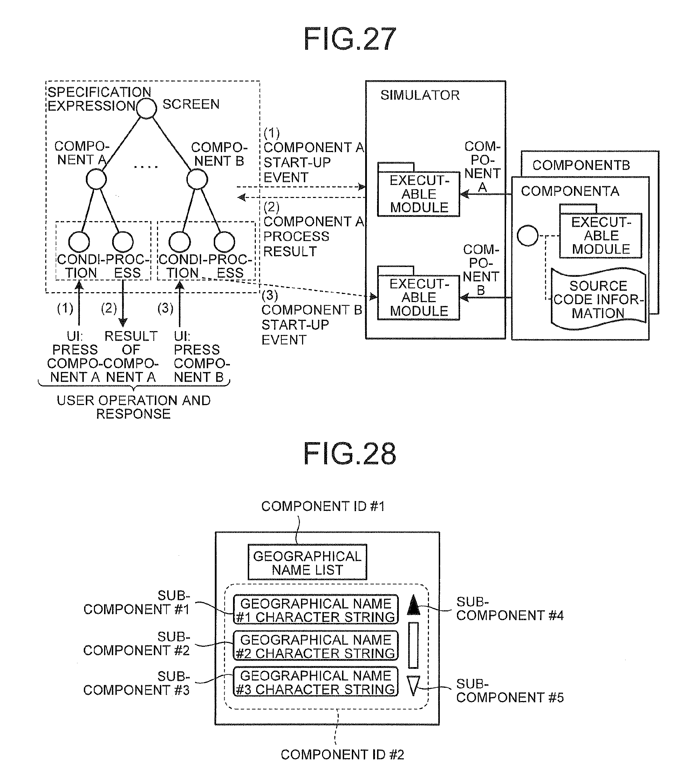

A simulation execution process will be explained below. FIG. 27 is a diagram for explaining the simulation execution process. When a UI component A is pressed by a user operation (see FIG. 27(1)), a simulator is notified of a component A start-up event, and an executable module of the simulator executes an operation in accordance with the description of a UI action definition and outputs a processing result of the component A (see FIG. 27(2)). Similarly, when a UI component B is pressed by a user operation (see FIG. 27(3)), the simulator is notified of a component B start-up event, and an executable module of the simulator executes an operation in accordance with the description of the UI action definition.

The first verifying unit 13c can perform verification by performing a simulation of state transitions based on the state transition specifications in the similar manner.

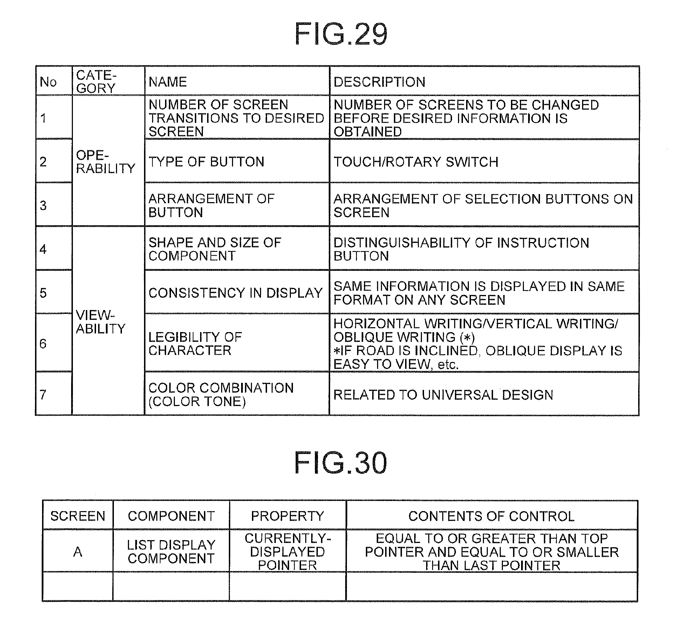

The second verifying unit 13d displays an operation screen of a user interface, extracts a feature amount of an operation screen based on the operation screen of the user interface, and verifies whether the feature amount satisfies a predetermined criterion based on the information on the attribute of a component. Specifically, the second verifying unit 13d performs criteria satisfaction verification of a UI operation. The second verifying unit 13d stores therein an index (metrics) of a screen (see FIG. 29 to be described later) as a scheme for ensuring viewability of a component or for preventing false recognition and erroneous operation in terms of a screen operation. The criteria satisfaction verification of the UI operation is a verification using a technique to extract characteristics of a screen concerning the UI operation as quantitatively as possible by measuring an index so as to check whether the criteria for efficiently realizing the UI operation is satisfied.

The second verifying unit 13d performs data conversion on the property of a component that displays information of a character string type or integer type on a screen to be displayed, in order that a phrase in the linguistic expression portion can be displayed. Specifically, in the data structure of specification data, information on linguistic expression, type, and restriction is given to the property of each component in the linguistic expression portion. Therefore, data conversion is performed on the property of a component that displays information of a character string type or integer type on a screen to be displayed, in order that a phrase in linguistic expression can be displayed. Then, as the verification execution screen, the phrase is displayed on the screen together with the component.

In FIG. 28, a verification execution screen is illustrated by way of example. FIG. 28 is a diagram illustrating an example of the verification execution screen. In the example in FIG. 28, a geographical name list is displayed on the component ID #1, and geographical names #1 to #3 and character strings are respectively displayed on the sub-components #1 to #3. In this way, by displaying the phrase together with the component on the screen, it becomes possible to easily determine what information is displayed at what position on the screen.

Thereafter, the second verifying unit 13d calls one of the metrics, extracts a feature amount from the relationship of all screens or between screens, and accumulates the feature amount for the one of the metrics. When the second verifying unit 13d verifies operation criteria on all the indices, the second verifying unit 13d outputs the feature amount. In FIG. 29, metrics for a UI operation is illustrated by way of example. FIG. 29 is a diagram illustrating an example of the metrics for a UI operation. As illustrated in FIG. 29, examples of the metrics for a UI operation include operability metrics and visibility metrics. For example, as the operability metrics, the number of screen transitions to a desired screen, a type of a button, and arrangement of the button are defined. As the visibility metrics, size of the shape of the component, consistency in display, legibility of characters, and color combination are defined.

For example, the second verifying unit 13d can automatically calculate a feature amount concerning the metrics of the legibility of a character by extracting a label component with a phrase "geographical name" in the linguistic expression and calculating the position of the label component. The linguistic expression of each component is also used to describe a UI operation by an action definition. This scheme makes it possible to pass on the UI specifications to an environment other than the present tool. Furthermore, a specification reviewer (a person other than a software developer who has knowledge of the software structure of a UI operation) can review the UI specifications.

The third creating unit 13e extracts restriction information from the specification data and creates test restriction information as a test case. A specific example will be explained below. For example, the third creating unit 13e checks whether any of all the UI components present on all screens has a property accompanied with restriction information, and when there is a property accompanied with restriction information, extracts the test restriction information of a test case. The test restriction information is a condition given to each of the properties of the UI components. Examples of the test restriction information include a condition of "a value needs to be equal to or greater than a display list top pointer and equal to or smaller than a last pointer in a display list" for a currently-displayed pointer, and a condition of "the number of characters is restricted" for the label #1 display character string to the label #3 display character string.

When a sub-node is present as in a combined component and if a property accompanied with restriction information is present for the sub-node, the third creating unit 13e extracts the restriction information as the test restriction information. Specifically, each of the properties of the UI components contains a given condition, such as an attribute of a property value or an available range of a property value, and the third creating unit 13e extracts the conditions of all the UI components on each of the screens and adds up them as restriction information check items for a test.

An example of the test restriction information is illustrated in FIG. 30. FIG. 30 is a diagram illustrating an example of the test restriction information. In the example in FIG. 30, "equal to or greater than the top pointer and equal to or smaller than the last pointer" is described as a restriction content for a property "currently-displayed pointer" of the list display component on the screen A. In this way, by creating and storing a test case, it becomes possible for a software developer to refer to the test case for reference in a software development process at a later stage of the UI specification process. This is because the software developer is not necessarily well acquainted with the specifications.

The fourth creating unit 13f creates a source code by using information on a condition for an action of a component, information on the content of a process concerning the action of the component, and information on the attribute of the component. Specifically, the fourth creating unit 13f extracts and encodes specification information on design of a screen component from the properties of all the UI components present on all the screens. When the action definition is present in the UI component, the fourth creating unit 13f converts the specification information of the action definition into a source code. When a sub-node is present as in a combined component, the fourth creating unit 13f creates a code concerning design and a code concerning an action definition for the sub-node and stores the codes in a source code storage unit 14d.

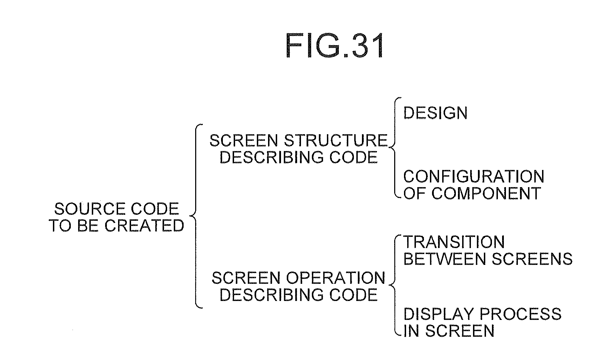

The code created as above serves as a code for realizing functions as illustrated in FIG. 31. FIG. 31 is a diagram illustrating a structure of a source code. Specifically, as illustrated in FIG. 31, the code includes a "screen structure describing code" that specifies a structure of a component and design of each of the screens, and a "screen operation describing code" that indicates a display process included in each of the screens and transitions between screens. These source codes are created for all of the components present on the screen, based on the specification information specifying the design of a UI component and control information specifying an UI operation of the UI component.

The storage unit 14 stores therein data and a program needed for various processes performed by the control unit 13, and includes the action definition format storage unit 14a, the specification data storage unit 14b, a test data storage unit 14c, and the source code storage unit 14d.

The action definition format storage unit 14a stores therein an action definition format. For example, as illustrated in FIG. 15, the action definition format storage unit 14a stores therein action definition formats by categories. The categories include an action condition and a process operation. The category of the action condition includes an event, numerical comparison, and character string comparison. The category of the process operation includes numerical setting, character string setting, method execution, and screen transitions. For example, the action definition format storage unit 14a stores therein an action definition format of "when an event of a component is generated" for the category of the event in the action condition.

The specification data storage unit 14b stores therein specification data. For example, as illustrated in FIG. 17, the specification data storage unit 14b stores therein specification data in a tree structure. In the example in FIG. 17, the screen A is defined as a top node and is connected to the component #1 and the component #2 being a combined component, both of which serve as lower nodes. The component #2 being a combined component is connected to the sub-components #1 to #5 serving as lower nodes. The specification data storage unit 14b stores therein an action condition and a process operation for each sub-node.

The test data storage unit 14c stores therein the test restriction information that is a test case created by the third creating unit 13e. For example, as illustrated in FIG. 30, the test data storage unit 14c stores therein "equal to or greater than the top pointer and equal to or smaller than the last pointer" as the restriction content of the property "currently-displayed pointer" of the list display component on the screen A.

The source code storage unit 14d stores therein the source code created by the fourth creating unit 13f. For example, as illustrated in FIG. 31, the source code storage unit 14d stores therein a "screen structure describing code" for specifying a structure and design of a component on the screen and a "screen operation describing code" for indicating a display process included in each of the screens and transitions between screens.

### Process performed by Setting Information Creating Apparatus

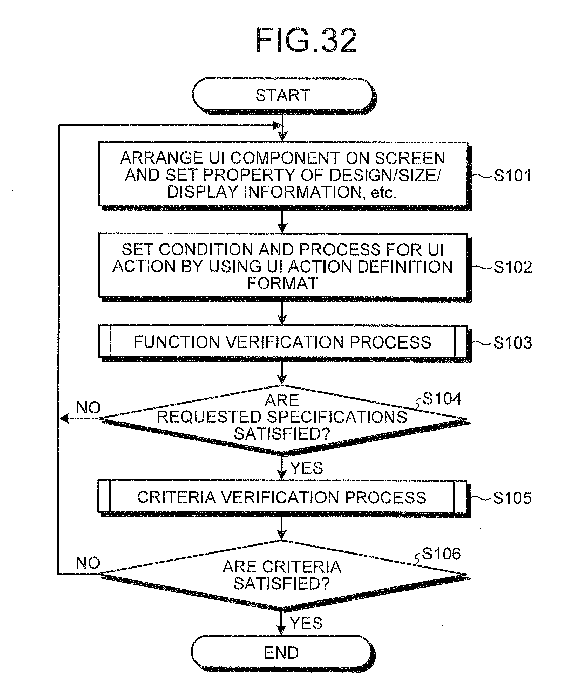

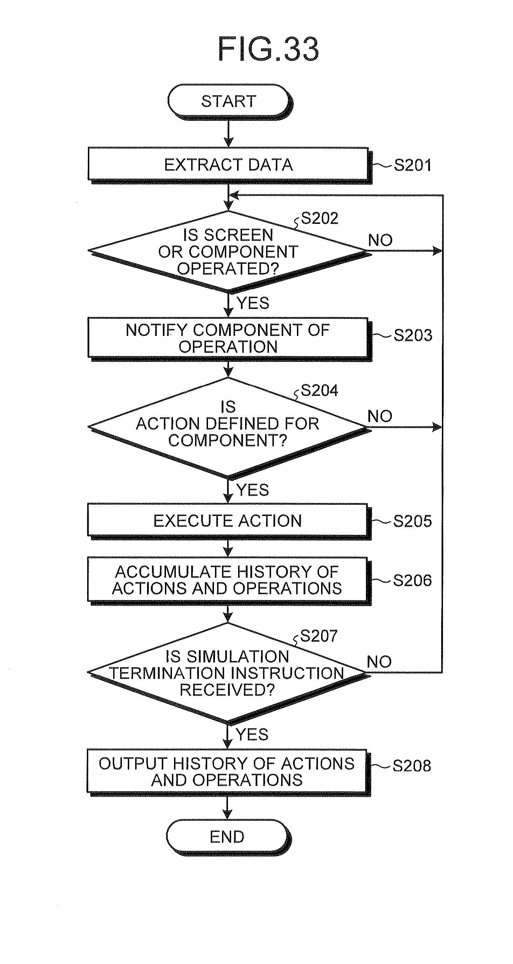

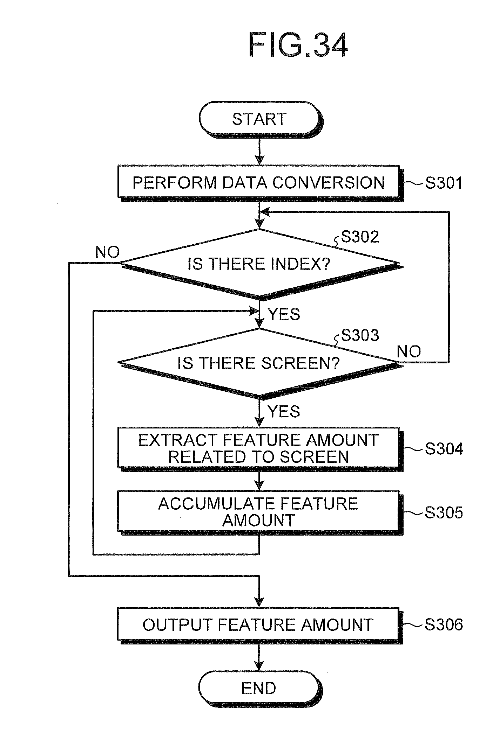

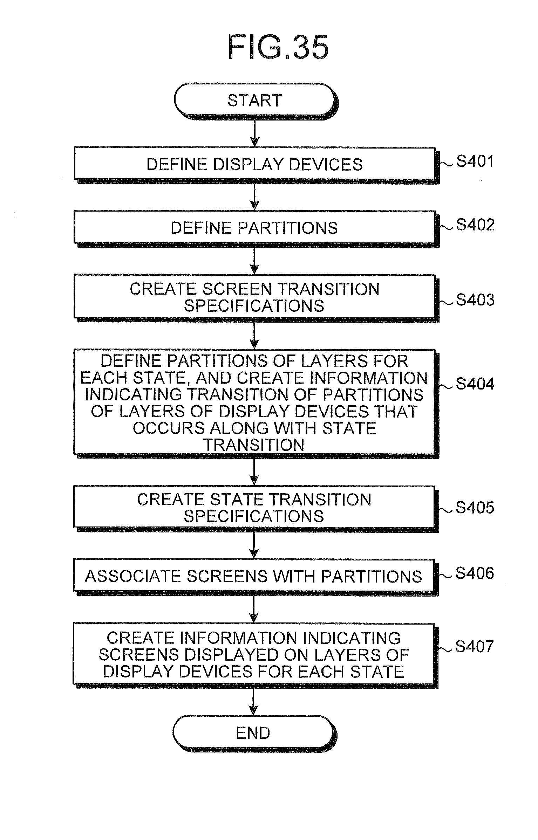

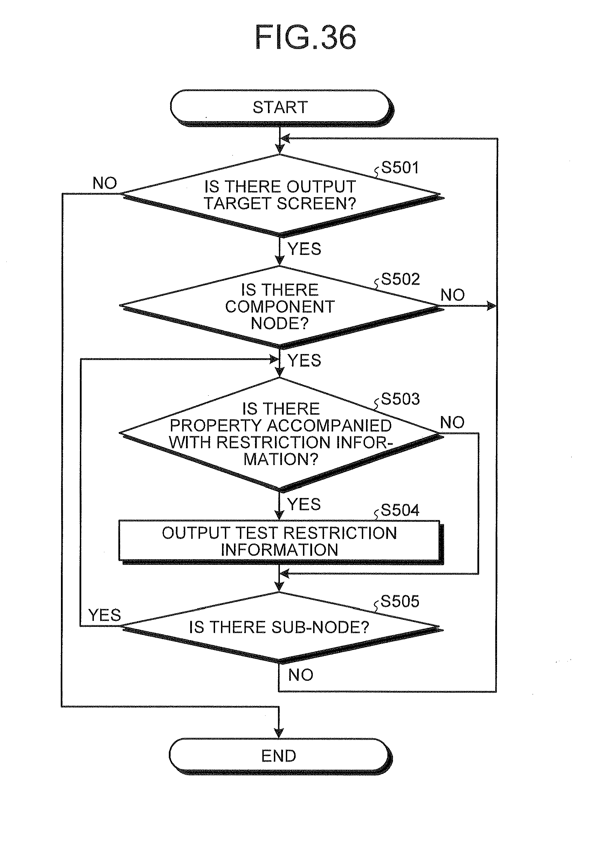

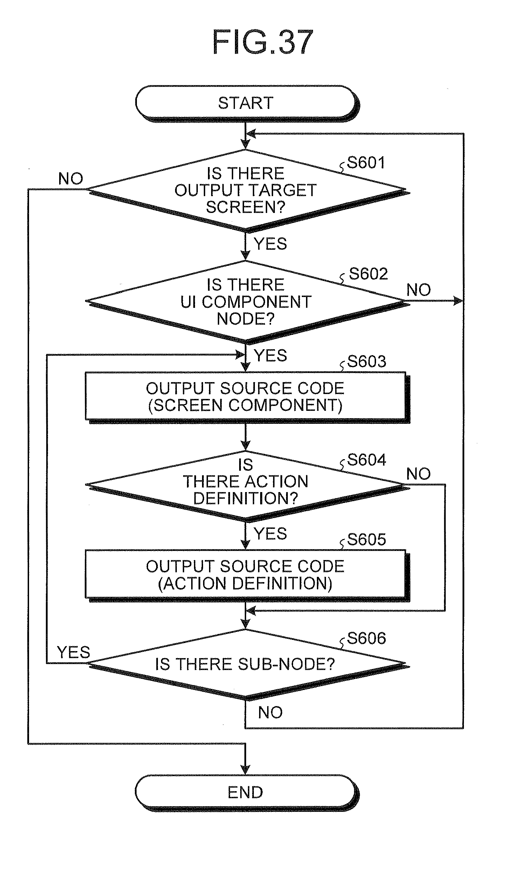

With reference to FIG. 32 to FIG. 37, processes performed by the setting information creating apparatus 10 according to the embodiment will be explained below. FIG. 32 is a flowchart for explaining the flow of a first specification creating process performed by the setting information creating apparatus according to the embodiment. FIG. 33 is a flowchart for explaining the flow of a function verification process performed by the setting information creating apparatus according to the embodiment. FIG. 34 is a flowchart for explaining the flow of a criteria verification process performed by the setting information creating apparatus according to the embodiment. FIG. 35 is a flowchart for explaining the flow of a second specification creating process performed by the setting information creating apparatus according to the embodiment. FIG. 36 is a flowchart for explaining the flow of a test item output process performed by the setting information creating apparatus according to the embodiment. FIG. 37 is a flowchart for explaining the flow of a source code output process performed by the setting information creating apparatus according to the embodiment.

As illustrated in FIG. 32, the setting information creating apparatus 10 receives selection of UI components needed to form a menu to be displayed on a screen, arrange the UI components on the screen, and receives settings of size, shape, color (normal color or pressed color), display condition, and the like (Step S101). The setting information creating apparatus 10 sets a start-up event, an action condition, and a process operation of UI action definition using the action definition formats for each of the UI components (Step S102). The setting information creating apparatus 10 sets operations of all UI components and functional components, and thereafter performs a function verification process of verifying whether a layout of the components and the operations of the UI components set by the simulator satisfy requested specifications (Step S103).

If the requested specifications are not satisfied (NO at Step S104), the setting information creating apparatus 10 returns the process to Step S101 and receives settings of UI components again. When the requested specifications are satisfied (YES at Step S104), the setting information creating apparatus 10 performs a criteria verification process of verifying whether criteria for respective indices are satisfied (Step S105). When the criteria are not satisfied (NO at Step S106), the setting information creating apparatus 10 returns the process to Step S101 and receives settings of UI components again. When the criteria are satisfied (YES at Step S106), the setting information creating apparatus 10 terminates the process.

With reference to FIG. 33, the function verification process performed by the setting information creating apparatus will be explained below. As illustrated in FIG. 33, the setting information creating apparatus 10 scans specification data from the top node and extracts a component for which an event is set (Step S201). The setting information creating apparatus 10 determines whether a screen or a component is operated (Step S202). When a screen or a component is operated (YES at Step S202), the setting information creating apparatus 10 notifies the UI component of the UI operation (Step S203) and determines whether an action is defined for the component (Step S204).

When determining that an action is not defined for the component (NO at Step S204), the setting information creating apparatus 10 returns the process to Step S202 and waits for a screen or a component to be operated. When determining that an action is defined in the component (YES at Step S204), the setting information creating apparatus 10 executes the action by using an executable module accompanied with the UI component (Step S205) and accumulates the history of actions and operations (Step S206).

The setting information creating apparatus 10 determines whether a simulation termination instruction is received (Step S207). When the simulation termination instruction is received (YES at Step S207), the setting information creating apparatus 10 outputs the history of actions and operations (Step S208). When the simulation termination instruction is not received (NO at Step S207), the setting information creating apparatus 10 returns the process to Step S202 and waits for a screen or a component to be operated. Thereafter, the user analyzes the output history to check whether the requirement is satisfied.

With reference to FIG. 34, a criteria verification process performed by the setting information creating apparatus will be explained. As illustrated in FIG. 34, the setting information creating apparatus 10 performs data conversion on the properties of components, the information of which is to be displayed on a screen in a character string type or in an integer type when the screen is displayed, in order that a phrase in the linguistic expression portion can be displayed (Step S301). The setting information creating apparatus 10 determines whether there is an index left for which the verification of operation criteria is not yet performed (Step S302). When there is any index left (YES at Step S302), the setting information creating apparatus 10 calls one index and determines whether there is a screen for which the verification of operation criteria is not yet performed (Step S303).

When there is any screen for which the verification of operation criteria is not yet performed (YES at Step S303), the setting information creating apparatus 10 extracts a feature amount of a screen from a relationship of all screens or between screens (Step S304), and accumulates the feature amount (Step S305). At Step S303, when there is no screen left for which the verification of operation criteria is not yet performed (NO at Step S303), the setting information creating apparatus 10 returns the process to Step S302 and determines whether there is an index left for which the verification of operation criteria is not yet performed. When there is no index for which the verification of operation criteria is not yet performed (NO at Step S302), the setting information creating apparatus 10 outputs the feature amount (Step S306) and terminates the process.

The second specification creating process will be explained below. As illustrated in FIG. 35, the setting information creating apparatus 10 defines attributes of display devices (Step S401). The setting information creating apparatus 10 defines partitions (Step S402). The setting information creating apparatus 10 creates screen transition specifications (Step S403). The setting information creating apparatus 10 defines partitions of respective layers of each of the display devices for each of states, and creates information indicating transition of partitions of each of the layers of the display devices that occurs along with state transition (Step S404). The setting information creating apparatus 10 creates state transition specifications (Step S405). The setting information creating apparatus 10 defines association relationships between screens and partitions (Step S406). The setting information creating apparatus 10 creates information indicating screens to be displayed on the respective layers of each of the display devices for each of the states (Step S407), and terminates the process.

With reference to FIG. 36, a test item output process will be explained. As illustrated in FIG. 36, the setting information creating apparatus 10 determines whether there is an output target screen to be output as an UI operation screen (Step S501). When there is no output target screen (NO at Step S501), the process is terminated. When there is an output target screen (YES at Step S501), the setting information creating apparatus 10 determines whether there is a component node (Step S502). When determining that there is no component node (NO at Step S502), the setting information creating apparatus 10 returns the process to Step S501. When determining that there is a component node (YES at Step S502), the setting information creating apparatus 10 determines whether there is a property accompanied with restriction information (Step S503). When there is a property accompanied with the restriction information (YES at Step S503), the setting information creating apparatus 10 outputs test restriction information (Step S504).

Thereafter, the setting information creating apparatus 10 determines whether there is a sub-node (Step S505). When there is a sub-node (YES at Step S505), the setting information creating apparatus 10 returns the process to Step S503, and when there is a property accompanied with restriction information, extracts test restriction information for the sub-nod. When there is no sub-node (NO at Step S505), the setting information creating apparatus 10 returns the process to Step S501 and determines whether there is an output target screen for which a test item is not yet output. At Step S501, when it is determined that there is no output target screen (NO at Step S501), the process is terminated.

With reference to FIG. 37, a source code output process will be explained. As illustrated in FIG. 37, the setting information creating apparatus 10 determines whether there is an output target screen (Step S601). When there is an output target screen (YES at Step S601), the setting information creating apparatus 10 determines whether there is a UI component node (Step S602). When there is no UI component node (NO at Step S602), the process returns to Step S601. When there is a UI component node (YES at Step S602), the setting information creating apparatus 10 extracts specification data related to a design of a screen component from the property and encodes the specification data to output a source code (Step S603).

The setting information creating apparatus 10 determines whether there is an action definition (Step S604). When there is an action definition (YES at Step S604), the setting information creating apparatus 10 converts specification information on the action definition into a source code and outputs the source code (Step S605). Thereafter, the setting information creating apparatus 10 determines whether there is a sub-node (Step S606). When there is a sub-node (YES at Step S606), the setting information creating apparatus 10 returns the process to Step S603 and creates codes related to a design and an action definition for the sub-node. When there is no sub-node (NO at Step S606), the setting information creating apparatus 10 returns the process to Step S601. At Step S601, when there is no screen for which a source code is not yet output (NO at Step S601), the setting information creating apparatus 10 terminates the process.

As described above, the setting information creating apparatus 10 of the embodiment separately describes the screen transition specifications, which are for realizing predetermined functions of respective applications, and the screen transition specifications, which are for a program that controls screens displayed on a plurality of display devices according to various changes of states. Therefore, it is possible to create transition information with simple contents. That is, according to the setting information creating apparatus 10 of the embodiment, it is possible to prevent redundancy of information indicating control contents of screen control including control of screen transitions and control of display positions.

Furthermore, according to the setting information creating apparatus 10 of the embodiment, a screen and a layer are associated with each other not directly but indirectly via a partition. Therefore, it is possible to easily associate a screen with a layer.

Moreover, the setting information creating apparatus 10 according to the embodiment displays a format that allows information on an action condition of a component displayed on a UI operation screen and information on a process operation of the component to be described in a predetermined form, and receives description of the specifications of the component based on the format. The setting information creating apparatus 10 displays an operation screen of a user interface based on the received information on the action condition of the component and the received information on the contents of a process for an action of the component, and performs a simulation of the action of the component displayed on the operation screen of the user interface. Therefore, a specification creator can verify the UI component while modifying the specifications of the component, so that development of a UI can be performed promptly.

Furthermore, according to the embodiment, the setting information creating apparatus 10 of the embodiment displays a format that allows information on the attribute of a component displayed on an operation screen of a user interface to be described in a predetermined form, and receives information on the attribute of the component based on the format. An operation screen of a user interface is displayed based on the received information on the attribute of the component, a feature amount concerning operability and viewability is extracted from the operation screen of the user interface, and the feature amount is output. Therefore, a developer can recognize the feature amount of the operability and the viewability of the screen related to a UI operation and thus can verify whether a criterion for realizing the UI operation is satisfied. As a result, it is possible to create an operation screen of a user interface so as to ensure the viewability and prevent an erroneous operation in terms of operation of the screen.

Moreover, according to the embodiment, the setting information creating apparatus 10 displays a format that allows descriptions in a predetermined form, and receives information on an action condition of a component displayed on an UI operation screen, information on the contents of a process concerning the action of the component, and information on the attribute of the component. Then, the setting information creating apparatus 10 creates a source code by using the information on the action condition of the component, the information on the contents of the process concerning the action of the component, and the information on the attribute of the component. Therefore, it is possible to create a source code directly from the specification data that has been confirmed normal in operation. As a result, it is possible to prevent false recognition and erroneous operation in coding.

Furthermore, according to the embodiment, the setting information creating apparatus 10 displays a format that allows information on the attribute of a component displayed on an UI operation screen to be described in a predetermined form, and receives the information on the attribute of the component based on the format and conditional information given to the information on the attribute. Then, the conditional information given to the received information on the attribute is extracted and output. Therefore, in a software development process at a later stage of the UI specification process, it is possible for a software developer to refer to the conditional information for reference.

While the embodiment of the present invention has been explained above, the present invention may be embodied in various different forms other than the above embodiment. In the following, the other embodiments of the present invention will be explained.

### (1) System Configuration etc.

Each of the constituent elements of the devices illustrated in drawings is functionally conceptual and is not necessarily configured physically as illustrated in the drawings. In other words, the specific embodiments of distribution or integration of the devices are not limited to those illustrated, and the whole or a part of the devices may be distributed or integrated physically or functionally in any unit according to various loads and usage. For example, the first creating unit 13a and the second creating unit 13b may be integrated with each other. Furthermore, the whole or a part of the processing functions performed by the devices may be realized by a CPU and a computer program analyzed and executed by the CPU or may be realized by hardware using a wired logic.

In the above embodiment, an example is explained in which the specifications of software for controlling screens of respective applications displayed on the display devices are created; however, the devices are not limited to the above embodiment. For example, it is possible to create specifications of software for controlling a screen of one application to be displayed on a plurality of display devices.

### Setting Information Creating Program

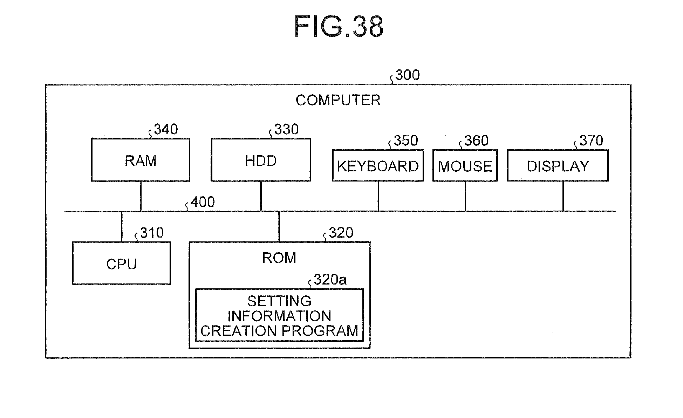

The various processes performed by the setting information creating apparatus explained in the above embodiment can be realized by causing a computer system, such as a personal computer or a workstation, to execute a program provided in advance. Therefore, in the followings, an example of a computer that executes a setting information creating program having the same functions as those of the setting information creating apparatus explained in the above embodiment will be explained with reference to FIG. 38. FIG. 38 is a diagram illustrating a computer that executes the setting information creating program.

As illustrated in FIG. 38, a computer 300 includes a central processing unit (CPU) 310, a read only memory (ROM) 320, a hard disk drive (HDD) 330, and a random access memory (RAM) 340. The computer 300 includes a keyboard 350, a mouse 360, and a display 370. The devices 300 to 370 are connected to one another via a bus 400.

The ROM 320 stores therein in advance a setting information creating program 320a that implements the same functions as those of the first creating unit 13a, the second creating unit 13b, the first verifying unit 13c, the second verifying unit 13d, the third creating unit 13e, and the fourth creating unit 13f. The setting information creating program 320a may appropriately be disintegrated. For example, it may be possible to disintegrate the setting information creating program 320a into a program that implements the same functions as those of the first creating unit 13a and the second creating unit 13b and a program that implements the same functions as those of the second verifying unit 13d, the third creating unit 13e, and the fourth creating unit 13f.

The CPU 310 reads out the setting information creating program 320a from the ROM 320 and executes the program.

The HDD 330 stores therein an action definition format, various transition specifications, test data, and a source code.

The CPU 310 reads out the action definition format, the various transition specifications, the test data, and the source code, and stores them in the RAM 340. The CPU 310 executes the setting information creating program by using the action definition format, the various transition specifications, the test data, and the source code stored in the RAM 340. All pieces of data stored in the RAM 340 are not necessarily always stored in the RAM 340. It is satisfactory to store only data to be used for a process in the RAM 340.

The setting information creating program is not necessarily initially stored in the ROM 320.

For example, it may be possible to store the program in a "portable physical medium", such as a flexible disk (FD), a compact disc read only memory (CD-ROM), a digital versatile disc (DVD), a magneto-optical disk, or an integrated circuit (IC) card, which is insertable into the computer 300, and cause the computer 300 to read out and execute the program.

Alternatively, it may be possible to store the program in "other computer (or server)" connected to the computer 300 via a public line, the Internet, a local area network (LAN), or a wide area network (WAN) and cause the computer 300 to read out and execute the program.

According to one aspect of the present invention, it is possible to prevent redundancy of information indicating control contents of screen control including control of screen transitions and control of display positions.

## Claims

1. A setting information creating program causing a computer to execute a process, the process comprising:
creating first transition information indicating a screen transition process related to a certain program;
creating second transition information indicating a transition process related to positional information indicating a screen display position of the certain program; and
creating setting information for displaying a screen of the certain program to be changed based on the first transition information at a position corresponding to the positional information to be changed based on the second transition information.

2. The setting information creating program according to claim 1,
wherein the second transition information indicates a transition process related to pattern information in which identification information for identifying the screen of the certain program and positional information indicating the display position are associated with each other.

3. The setting information creating program according to claim 1 or 2, the setting information creating program causing the computer to execute the process, the process further comprising:
defining a transition process contained in transition information contained in the first transition information and the second transition information by using a common program component when creating the first transition information and the second transition information.

4. A setting information creating apparatus comprising:
a first creating unit (13a) that creates first transition information indicating a screen transition process related to a certain program; and
a second creating unit (13b) that creates second transition information indicating a transition process related to positional information indicating a screen display position of the certain program, and that creates setting information for displaying a screen of the certain program to be changed based on the first transition information at a position corresponding to the positional information to be changed based on the second transition information.

5. A setting information creating method executed by a computer, the setting information creating method comprising:
creating first transition information indicating a screen transition process related to a certain program;
creating second transition information indicating a transition process related to positional information indicating a screen display position of the certain program; and
creating setting information for displaying a screen of the certain program to be changed based on the first transition information at a position corresponding to the positional information to be changed based on the second transition information.
